# EUROPEAN PATENT SPECIFICATION

(11) **EP 2 957 835 B1**
(45) Date of publication and mention of the grant of the patent: **21.03.2018**
(21) Application number: 14172924.4
(22) Date of filing: 18.06.2014
(51) Int. Cl.: F23R 3/46, F23R 3/06, F23C 9/00, F23C 9/08

(54) **Method for recirculation of exhaust gas from a combustion chamber of a combustor of a gas turbine and gas turbine for conducting said method**
Verfahren zur Rückführung von Abgas aus einer Brennkammer eines Brenners einer Gasturbine sowie Gasturbine zur Durchführung des Verfahrens
Procédé de recirculation des gaz d'échappement provenant d'une chambre de combustion d'un brûleur d'une turbine à gaz et turbine à gaz pour l'exécution de ce procédé

(43) Date of publication of application: 23.12.2015
(73) Proprietor: Ansaldo Energia Switzerland AG, 5401 Baden (CH)
(72) Inventor: Knöpfel, Hanspeter, 5605 Dottikon (CH); Ruck, Thomas, 5332 Rekingen (CH); Pereti, Michele, 5400 Baden (CH)
(74) Representative: Bernotti, Andrea

(56) References cited:
- EP-A1- 0 985 882
- GB-A- 2 288 011
- US-A1- 2013 340 404

## Description

### BACKGROUND OF THE INVENTION

The present invention relates to the technology of gas turbines. It refers to a method for recirculation of exhaust gas from a combustion chamber of a combustor of a gas turbine according to the preamble of claim 1.

It further refers to a gas turbine for conducting said method.

### PRIOR ART

The reheat system (sequential combustion) or staged system that is for example incorporated in a gas turbine of the GT24 type of the applicant, proved to excel in achieving very low emissions at high firing temperature.

Such combustion system fulfills also a number of stringent requirements such as: low pressure drop, low cooling air consumption, long lifetime and fuel flexibility. One of the key elements such systems rely on, is the mixing level achieved between hot gas and fuel or fuel /air mixture before the flame.

The concepts developed up to now provide very good mixing levels and combustion performances. However they rely either in high momentum flux ratios, complicated geometries or complex sealing systems between the fuel injector and the hot gas path (see for example documents US 5,645,410, WO 2011/037646 A1, US 5,351,474, US 6,192,688 B1, WO 2011/054757, WO 2011/054766, EP 2 211 109).

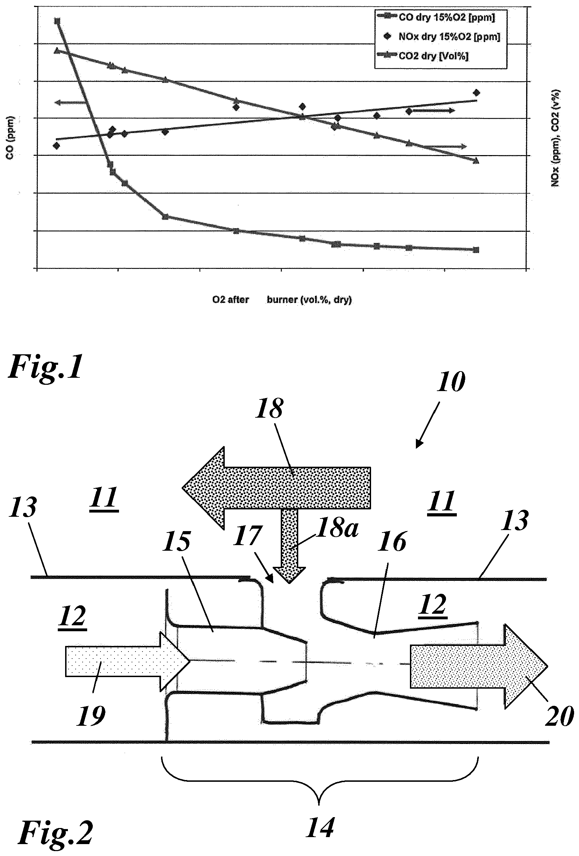

Another way is flue gas recirculation. This way reduces the O₂ content in the air/flue gas mixture which results in lower NOₓ emissions (see Fig. 1, which shows the NOₓ/CO content as a function of O₂ content). There are several documents (e.g. US 3,949,548, US 4,609,342, JP 11304151, EP 1 752 616 A2,
WO 2008/155242 A1) dealing with flue gas recirculation. All these documents use external flue gas recirculation whereas the flue gas is taken from the exhaust flow and guided back to the compressor inlet or an additional compressor is used to compress the flue gas up to a certain pressure (fuel preheating, cooling of hot gas parts etc).

GB 2 288 011 A teaches to recirculate part of exhaust gas flow directly from the combustion chamber. The partial exhaust gas flow is extracted using a Venturi arrangement operated by a pressurized fluid and configured to create low static pressure at suction locations of the combustion chamber. Another method for recirculating exhaust gas is known from EP0985882 A1, which discloses the preamble of claims 1 and 2. Although the known flue gas recirculation scheme leads to better emission properties of the gas turbine, it is connected with substantial additional apparatus complexity and requires a substantial amount of investment.

### SUMMARY OF THE INVENTION

It is an object of the present invention to provide a method for recirculation of exhaust gas from a combustion chamber of a combustor of a gas turbine, which has the advantage of flue gas recirculation in general but is less costly and requires a substantially reduced effort compared with know recirculation technology.

It is a further object to provide a gas turbine for conducting said method.

These and other objects are obtained by a method according to Claim 1 and a gas turbine according to Claim 2. The inventive method for recirculation of exhaust gas from a combustion chamber of a combustor of a gas turbine back to the supply side of said combustor is characterized in that a partial flow of the exhaust gas in said combustion chamber is directly extracted from said combustion chamber and internally fed back to an entrance of the combustor through an internal channel of said combustor. Said partial flow of the exhaust gas is extracted by means of a Venturi arrangement, which is provided at said combustion chamber, and which is operated by a pressurized fluid.

Specifically, said pressurized fluid is compressed air, said internal channel is a cooling air channel, and said exhaust gas is recirculated as part of a mixed exhaust gas/air recirculation flow.

According to the invention said Venturi arrangement comprises a separate nozzle and a separate diffusor, and the nozzle is arranged within the combustion chamber and ejects compressed air through said suction hole into said diffusor, which is arranged outside said combustor liner wall.

According to an example, which does not form part of the invention, said compressed air is supplied from a compressor of said gas turbine or from an external compressed air storage, and said compressed air flows along said combustion chamber in a direction opposite to said exhaust gas.

According to an example, which does not form part of the invention, the mass flow of said pressurized fluid through said Venturi arrangement is controlled by a valve mechanism.

The inventive gas turbine comprises all the features according to claim 2. According to an embodiment of the invention said gas turbine has an annular combustion chamber with respect to a machine axis of said gas turbine.

According to an example, which does not form part of the invention, said gas turbine has a plurality of combustion chambers in a circumferential arrangement around a machine axis of said gas turbine.

According to an example, which does not form part of the invention, said gas turbine has a silo-type combustion chambers arranged perpendicular to a machine axis of said gas turbine.

According to another example, which does not form part of the invention, said gas turbine comprises a compressor, and that said compressed cooling air flowing through said cooling air channel is supplied by said compressor.

According to the invention said Venturi arrangements are integrated into said combustor liner wall.

Specifically, said Venturi arrangements each comprise a separate nozzle and a separate diffusor, and that the nozzle is arranged within the combustion chamber and ejects compressed air through a respective suction hole into said diffusor, which is arranged outside said combustor liner wall.

According to the invention said Venturi arrangements each comprise a separate nozzle and a separate diffusor being arranged one after the other along a common axis.

According to an example, which does not form part of the invention, the mass flow of said pressurized fluid through said Venturi arrangements is controlled by a valve mechanism.

Venturi nozzles can have a circular cross section, as for example in a constriction of a pipe. However, other cross sections are conceivable. For example a constriction between two parallel plates in which the flow area is defined by the height of a channel between the two plates be also used to accelerate the inflow of pressurized by a reduction in channel height, which leads to a reduction in static pressure which in turn can be used to intake exhaust gases from a combustor. By subsequent increase of the channel height the dynamic pressure can be recovered to deliver a mixture of exhaust gas and inflow of pressurized fluid.

### BRIEF DESCRIPTION OF THE DRAWINGS

The present invention is now to be explained more closely by means of different embodiments and with reference to the attached drawings.
- Fig. 1: shows in a diagram the dependence of the NOₓ emissions on the O2 content in an air/flue gas mixture of a flue gas recirculation scheme;
- Fig. 2: shows a simplified drawing of a Venturi exhaust gas recirculation arrangement in a cooling air channel according to an example, which does not form part of the invention;
- Fig. 3: shows a simplified drawing of a Venturi exhaust gas recirculation arrangement integrated into the combustor liner wall according to the invention;
- Fig. 4: shows a simplified drawing of a Venturi exhaust gas recirculation arrangement in a cooling air channel with additional cooling means according to an example, which does not form part of the invention;
- Fig. 5: shows a section through a gas turbine of the GT24/26 type with sequential combustion and specific Venturi arrangement locations in accordance with a further embodiment of the invention;
- Fig. 6: shows a section through a gas turbine of the GT13E2 type with an annular combustor and specific Venturi arrangement locations in accordance with another embodiment of the invention;
- Fig. 7: shows a section through a different gas turbine (a) with a plurality of individual circumferentially arranged combustors (b) (can combustor configuration) and specific Venturi arrangement locations in accordance with another embodiment of the invention; and
- Fig. 8: shows in a perspective view a gas turbine of the GT11 N2 type (a) with a silo-type combustor (b) and specific Venturi arrangement locations in accordance with a further embodiment of the invention.

### DETAILED DESCRIPTION OF DIFFERENT EMBODIMENTS OF THE INVENTION

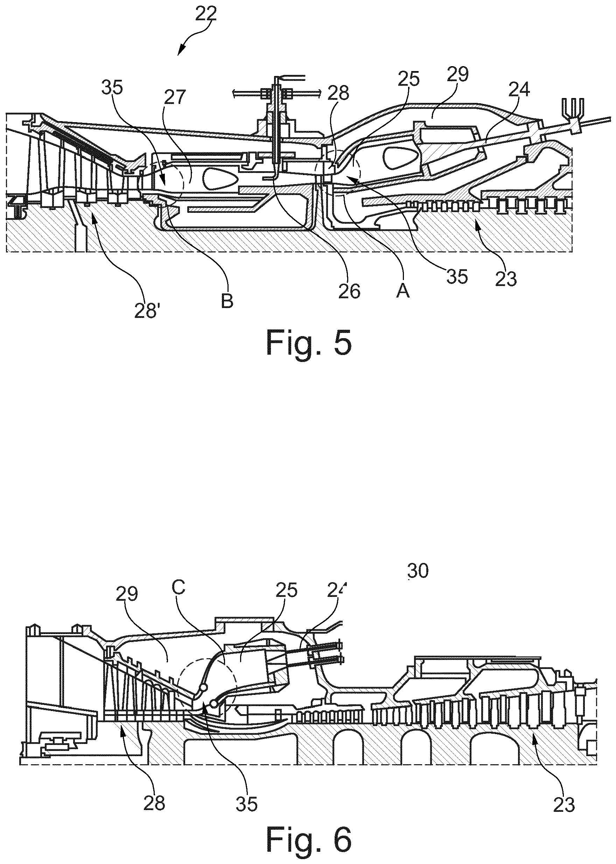

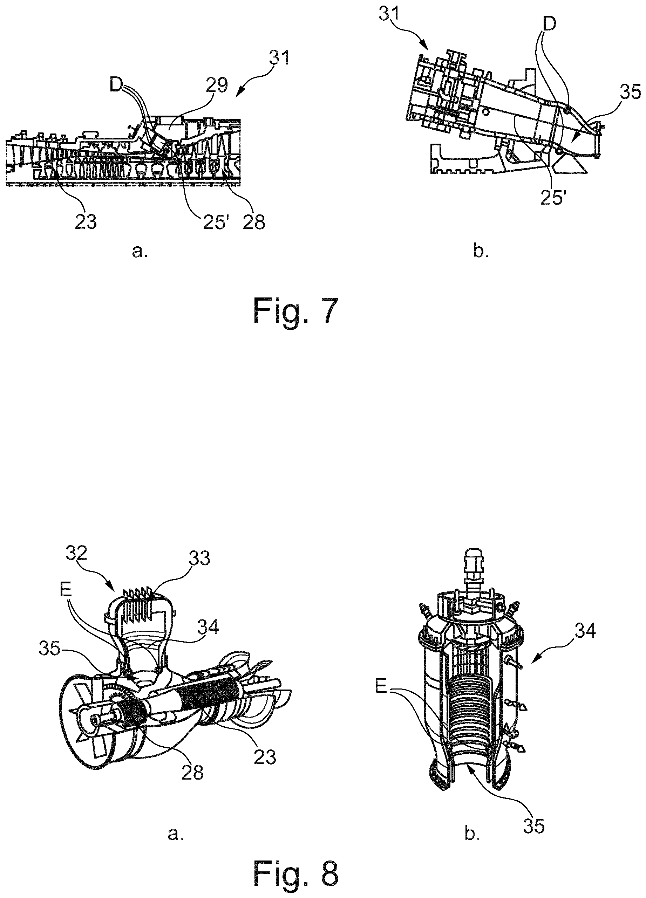

In the present invention a system is proposed, in which a novel passive flue gas recirculation is proposed. The recirculation is done inside the engine directly at the combustors. Such configuration could be well suited for sequential annular combustion systems (as in the GT24/GT26, see Fig. 5), for annular combustion (GT13E2, see Fig. 6), for can combustor configurations (see Fig. 7) or silo combustors (GT11N2, see Fig. 8).

The system for the recirculation of exhaust gas should be designed to be able to recirculate 10-50 %. That means the flue gas (or exhaust gas) content in the air/flue gas mixture is in a range of 10 to 50%.

As shown in Fig. 2, a combustor liner wall 13 encloses the combustion chamber 11 of a combustor 10 of a gas turbine. Exhaust gas (flue gas) 18 flows in this example from right to left in order to leave the combustor and enter a subsequent turbine section with rotating blades (not shown). Outside the combustor liner wall 13 a cooling air channel 12 is arranged. Compressed air 19 flows opposite to exhaust gas flow 18 along cooling air channel 12 to cool the combustor liner wall 13 and later on to be mixed with fuel to enter the combustor through respective burners (see for example burners 24, 26 in Fig. 5).

A suction hole or flue gas exit 17 is provided in the combustor liner wall 13. The suction hole or flue gas exit 17 is preferentially located in a place of the cooling air supply, where a low static pressure and high flow velocity of the cooling air is reached. A preferred construction option for generating such low static pressure is a Venturi arrangement (Venturi ejector) 14 comprising a nozzle 15 and a diffuser 16, whereby the exit plane of the flue gas pipe coming from the suction hole 17 is located in the area of the Venturi arrangement 14 with the smallest cross section (see Fig. 2).

The compressed air 19 is moving along the combustor liner wall 13 towards the burner, where it enters the combustion chamber 11. By guiding a part of the compressed air 18 into nozzles 15, the air is accelerated and a surrounding low pressure region created. By this low pressure, exhaust gas 18a is sucked out of the combustor (combustion chamber 11) and entrained into the high velocity air jet resulting in a mixed exhaust gas/air flow 20.

By directing the air jet into a suitable Venturi nozzle 15, 16, the process of exhaust gas extraction can be optimized for minimal pressure loss. A sufficient long path between the Venturi arrangement 14 and the burner at the upstream end of the combustor 10 will ensure good mixing between the ejected exhaust gas 18a and the compressed air 19.

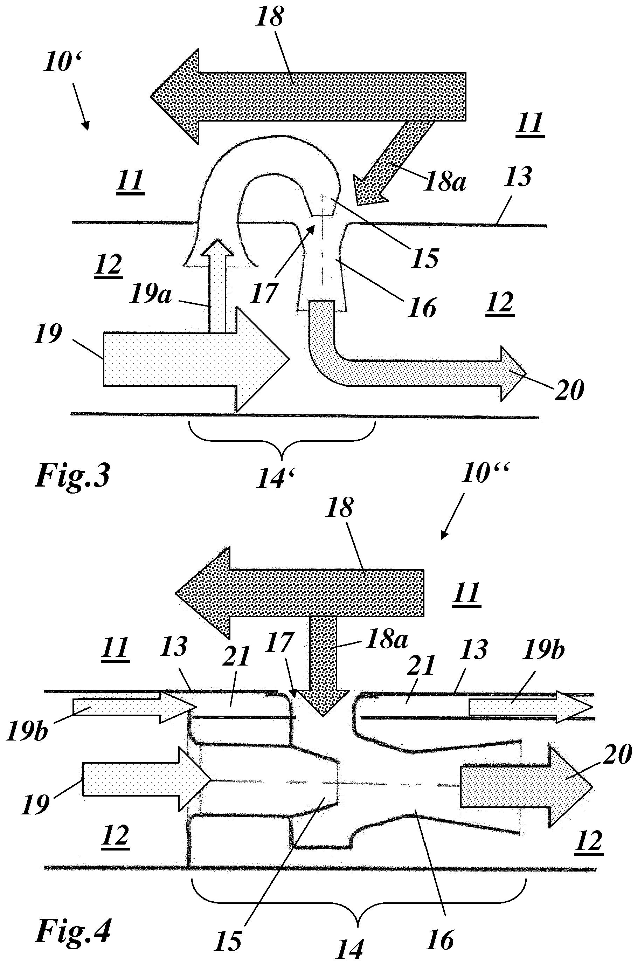

As an option the air mass flow through the Venturi arrangement 14 can be regulated by a valve mechanism (not shown). According to the invention, (Fig. 3) the nozzle 15 of a Venturi arrangement 14' could be placed inside the combustor 10' or combustion chamber 11, as it will be cooled by the air flowing inside. The diffuser 16 is directly connected to suction hole 17. The whole arrangement is oriented perpendicular to the direction of the compressed air flow 19 in cooling air channel 12. The function will be the same as explained in Fig. 2.

Large flue gas recirculation rates could result in higher temperature of the compressed air and flue gas mixture (20). In order to prevent overheating of the combustor, a separate channel flushed with compressed air could be used to separate the hot mixture (compressed air & flue gas) from the combustor liner wall. Fig. 4 shows a suitable example, which does not form part of the invention, in form of a Venturi arrangement 14 similar to the one of Fig. 2. In this example, an improved cooling of combustion chamber 11 of combustor 10" is achieved by providing a separate cooling air flow path 21, wherein a partial flow 19b of compressed air is used to thermally separate the Venturi arrangement 14 and mixed exhaust gas/air flow 20 from the combustor liner wall 13.

Optionally, the air mass flow and subsequently the exhaust gas recirculation could be adjusted by valves or flaps.

Further, the process could be driven by steam instead of compressed air.

Finally, as shown in Fig. 4, an improvement of the cooling of the combustor liner wall can be reached with a separate flow path for cooling air.

As already mentioned before, Venturi arrangements of the kind shown in Fig. 2-4 can be used in various types of gas turbines at respective Venturi arrangement locations A-E (Fig. 5-8).

Fig. 5 shows a section through a gas turbine 22 of the well-known GT24/26 type with sequential combustion comprising first and second combustion chambers 25, 27, first and second burners 24, 26, and first and second turbine sections 28, 28'. Venturi arrangements are located at specific Venturi arrangement locations A and B at the transition between combustion chambers 25, 27 and turbine sections 28, 28'. The compressed air is generated in this case by a compressor 23 of the gas turbine 22 and supplied through a plenum 29.

Fig. 6 shows a section through a gas turbine 30 of the well-known GT13E2 type with an annular combustion chamber 25 and specific Venturi arrangement locations C between the combustor with its combustion chamber 25 and burners 24 and the turbine section 28. Again, a compressor 23 supplies compressed air via a plenum 29.

Fig. 7 shows a section through a different gas turbine 31 (a) with a plurality of individual, circumferentially arranged combustion chambers 25' (b) (can combustor configuration) and specific Venturi arrangement locations D at the transition sections 35 between combustion chambers 25' and a subsequent turbine section 28. Again, a compressor 23 supplies compressed air via a plenum 29.

Fig. 8 shows in a perspective view a gas turbine 32 of the well-known GT11 N2 type with a silo-type combustor with a combustion chamber 34 and burners 33 and specific Venturi arrangement locations E in the transition section 35 between combustion chamber 34 and turbine section 28. A compressor 23 supplies compressed air.

The cooling air (or compressed air) driving the Venturi ejector can be taken from a compressor plenum (29) or cooling air pipes (e.g. for the GT 24/26 type of Fig. 5 compressor exit air or high pressure cooling air can be used to drive the recirculation of the second combustor 26, 27). In the cooling air supply line a control valve and/or booster/blower can be arranged to control the cooling air flow and thereby the amount of recirculated hot gas.

A possible operating concept can for example have a high recirculation rate at low part load (e.g. up to 50 or 60% rel. load) to increase the combustor inlet temperature due to the recirculation of hot flue gas.

For higher loads circulation can be reduced (completely switching off of compressed air or minimized flow to avoid hot gas ingestion without cooling air flow).

At high load (for example above 80 to 90% rel. load) and base load the recirculation can be increased again to reduce NOₓ emission due to the reduction of oxygen concentration in the combustor inlet gas with high recirculation rate.

When using compressor exit air to drive the ejector a mass flow control can be achieved due to the change of temperature: At part load the compressor exit pressure is reduced while the hot gas temperature remains high. Thus the ratio of density of the compressed air driving the injector to the density of the flue gas is higher than at base load. This increased density ratio leads to a higher recirculation rate (ratio of total combustor flue gas to recirculated flue gas).

In another example re-cooled compressed air can be used to drive the Venturi injector. The temperature can be controlled to control the recirculation rate. In special cases of a gas turbine with CAES (compressed air energy storage, see for example document DE 34 114 44 A1) the application of flue gas recirculation around the combustor is in particular advantageous for such a system. In a CAES system, in particular during start up, the combustor inlet temperature is very low since the compressed air is taken from the storage and has not compressor exit temperature.

The advantages of the invention are:
- Lower NOₓ emissions
- Higher air temperatures at part load
   ∘ Better part load operation behavior
   ∘ Better flame stabilization
   ∘ Better burn out and with it lower CO emissions
- Less costly than active flue gas recirculation
   ∘ Less piping
   ∘ No heat exchanger required
   ∘ No water separator
   ∘ Compact design
- Adjustability of recirculated mass possible

### LIST OF REFERENCE NUMERALS

- 10,10',10": combustor
- 11: combustion chamber
- 12: cooling air channel
- 13: combustor liner wall
- 14,14': Venturi arrangement
- 15: nozzle
- 16: diffuser
- 17: suction hole
- 18: exhaust gas (main flow)
- 18a: exhaust gas (partial flow)
- 19: compressed air (main flow)
- 19a,b: compressed air (partial flow)
- 20: mixed exhaust gas/air flow (recirculation flow)
- 21: cooling air flow path (separate)
- 22,30,31,32: gas turbine
- 23: compressor
- 24,26,33: burner
- 25,25',27,34: combustion chamber
- 28,28': turbine section
- 29: plenum
- 35: transition section
- A,B,C,D,E: Venturi arrangement location

## Claims

1. Method for recirculation of exhaust gas (18) from a combustion chamber (11; 25, 25', 27, 34) of a combustor (10, 10', 10") of a gas turbine (22, 30, 31, 32) back to the supply side of said combustor (10, 10', 10"), wherein:
a partial flow (18a) of the exhaust gas (18) in said combustion chamber (11; 25, 25', 27, 34) is directly extracted from said combustion chamber (11; 25, 25', 27, 34) and internally fed back to an entrance of the combustor (10, 10', 10") through an internal channel (12) of said combustor (10, 10', 10");
said partial flow (18a) of the exhaust gas (18) is extracted by means of a Venturi arrangement (14, 14'), which is provided at said combustion chamber (11; 25, 25', 27, 34), and which is operated by a pressurized fluid (19);
said pressurized fluid is compressed air (19), said internal channel is a cooling air channel (12), and said exhaust gas (18) is recirculated as part of a mixed exhaust gas/air recirculation flow (20);
said combustion chamber (11; 25, 25', 27, 34) is confined by a combustor liner wall (13), said Venturi arrangement (14') is integrated into said combustor liner wall (13), and said partial flow (18a) of the exhaust gas (18) is extracted through a suction hole (17) in said combustor liner wall (13);
**characterized in that** said Venturi arrangement (14') comprises a separate nozzle (15) and a separate diffusor (16), and the nozzle (15) is arranged within the combustion chamber (11; 25, 25', 27, 34) and ejects compressed air (19a) through said suction hole (17) into said diffusor (16), which is arranged outside said combustor liner wall (13).

2. Gas turbine (22, 30, 31, 32) for conducting the method according to Claim 1, said gas turbine (22, 30, 31, 32) comprising at least one combustion chamber (25, 25', 27, 34) for generating hot gas by burning a fuel/air mixture and a subsequent turbine section (28, 28'), said combustion chamber (25, 25', 27, 34) opens with a transition section (35) into the subsequent turbine section (28, 28'), whereby said at least one combustion chamber (25, 25', 27, 34) is surrounded by a cooling air channel (12), through which compressed cooling air (19) flows opposite to said hot gas in said combustion chamber (25, 25', 27, 34), wherein:
said combustion chamber (25, 25', 27, 34) and said adjacent cooling air channel (12) are separated by a combustor liner wall (13), and there are suction holes (17) provided in said combustor liner wall (13) at places, where the static pressure is low enough that exhaust gas (18a) is sucked through said suction holes (17) into said cooling air channel (12); wherein Venturi arrangements (14, 14') are provided at said suction holes (17) in order to generate the necessary low static pressure;
said Venturi arrangements (14') are integrated into said combustor liner wall (13);
**characterized in that** said Venturi arrangements (14') each comprise a separate nozzle (15) and a separate diffusor (16), and that the nozzle (15) is arranged within the combustion chamber (11; 25, 25', 27, 34) and ejects compressed air (19a) through a respective suction hole (17) into said diffusor (16), which is arranged outside said combustor liner wall (13).

3. Gas turbine as claimed in Claim 2, **characterized in that** said gas turbine (22, 30) has an annular combustion chamber (25, 27) with respect to a machine axis of said gas turbine (22, 30).

## Patentansprüche

1. Verfahren zum Rezirkulieren von Abgas (18) aus einer Brennkammer (11; 25, 25', 27, 34) eines Brenners (10, 10', 10") einer Gasturbine (22, 30, 31, 32) zurück zur Zulieferseite des Brenners (10, 10', 10"), wobei:
ein Teilstrom (18a) des Abgases (18) in der Brennkammer (11; 25, 25', 27, 34) direkt aus der Brennkammer (11; 25, 25', 27, 34) abgezogen wird und intern zu einem Eingang des Brenners (10, 10', 10") durch einen internen Kanal (12) des Brenners (10, 10', 10") rückgeführt wird;
der Teilstrom (18a) des Abgases (18) mittels einer Venturi-Anordnung (14, 14') abgezogen wird, die an der Brennkammer (11; 25, 25', 27, 34) vorgesehen ist und die durch ein druckbeaufschlagtes Fluid (19) betrieben wird;
das druckbeaufschlagte Fluid Druckluft (19) ist, der interne Kanal ein Kühlluftkanal (12) ist und das Abgas (18) als Teil eines gemischten Abgas/Luft-Rezirkulationsstroms (20) rezirkuliert wird;
die Brennkammer (11; 25, 25', 27, 34) durch eine Brenner-Auskleidungswand (13) begrenzt ist, wobei die Venturi-Anordnung (14') in die Brenner-Auskleidungswand (13) integriert ist und der Teilstrom (18a) des Abgases (18) durch eine Ansaugöffnung (17) in der Brenner-Auskleidungswand (13) abgezogen wird;
**dadurch gekennzeichnet, dass** die Venturi-Anordnung (14') eine separate Düse (15) und einen separaten Diffusor (16) umfasst und die Düse (15) innerhalb der Brennkammer (11; 25, 25', 27, 34) angeordnet ist und Druckluft (19a) durch die Ansaugöffnung (17) in den Diffusor (16) ausstößt, der außerhalb der Brennkammer-Auskleidungswand (13) angeordnet ist.

2. Gasturbine (22, 30, 31, 32) zur Durchführung des Verfahrens nach Anspruch 1,
wobei die Gasturbine (22, 30, 31, 32) mindestens eine Brennkammer (25, 25', 27, 34) zur Erzeugung von Heißgas durch Verbrennen eines Brennstoff-/Luft-Gemischs und einen anschließenden Turbinenabschnitt (28, 28') aufweist, welche Brennkammer (25, 25', 27, 34) sich mit einem Übergangsabschnitt (35) in den anschließenden Turbinenabschnitt (28, 28') öffnet, wobei die mindestens eine Brennkammer (25, 25', 27, 34) von einem Kühlluftkanal (12) umgeben ist, durch welchen komprimierte Kühlluft (19) entgegengesetzt zu dem Heißgas in der Brennkammer (25, 25', 27, 34) strömt, wobei:
die Brennkammer (25, 25', 27, 34) und der benachbarte Kühlluftkanal (12) durch eine Brenner-Auskleidungswand (13) getrennt sind und in der Brenner-Auskleidungswand (13) Ansaugöffnungen (17) an Stellen angeordnet sind, an welchen der statische Druck ausreichend niedrig ist, dass Abgas (18a) durch die Ansaugöffnung (17) in den Kühlluftkanal (12) angesaugt wird, wobei
Venturi-Anordnungen (14, 14') an den Ansaugöffnungen (17) vorgesehen sind, um den erforderlichen niedrigen statischen Druck zu erzeugen;
die Venturi-Anordnungen (14') in die Brenner-Auskleidungswand (13) integriert sind;
**dadurch gekennzeichnet, dass** die Venturi-Anordnungen (14') jeweils eine separate Düse (15) und einen separaten Diffusor (16) umfassen und dass die Düse (15) innerhalb der Brennkammer (11; 25, 25', 27, 34) angeordnet ist und Druckluft (19a) durch eine jeweilige Ansaugöffnung (17) in den Diffusor (16) ausstößt, der außerhalb der Brenner-Auskleidungswand (13) angeordnet ist.

3. Gasturbine nach Anspruch 2,
**dadurch gekennzeichnet, dass** die Gasturbine (22, 30) eine ringförmige Brennkammer (25, 27) in Bezug auf eine Maschinenachse der Gasturbine (22, 30) aufweist.

## Revendications

1. Procédé de recirculation de gaz d'échappement (18) provenant d'une chambre de combustion (11 ; 25, 25', 27, 34) d'un brûleur (10, 10', 10") d'une turbine à gaz (22, 30, 31, 32) vers le côté d'alimentation dudit brûleur (10, 10', 10"), dans lequel :
un écoulement partiel (18a) des gaz d'échappement (18) dans ladite chambre de combustion (11 ; 25, 25', 27, 34) est directement extrait de ladite chambre de combustion (11 ; 25, 25', 27, 34) et renvoyé en interne vers une entrée du brûleur (10, 10', 10") par le biais d'un canal interne (12) dudit brûleur (10, 10', 10") ;
ledit écoulement partiel (18a) de gaz d'échappement (18) est extrait à l'aide d'un ensemble Venturi (14, 14'), qui est prévu au niveau de ladite chambre de combustion (11 ; 25, 25', 27, 34), et qui est actionné par un fluide sous pression (19) ;
ledit fluide sous pression est de l'air comprimé (19), ledit canal interne est un canal d'air de refroidissement (12), et lesdits gaz d'échappement (18) sont recirculés dans le cadre d'un flux de recirculation de gaz/d'air d'échappement mixte (20) ;
ladite chambre de combustion (11 ; 25, 25', 27, 34) est confinée par une paroi de manchon de brûleur (13), ledit ensemble Venturi (14') est intégré à ladite paroi de manchon de brûleur (13), et ledit écoulement partiel (18a) de gaz d'échappement (18) est extrait par le biais d'un orifice d'aspiration (17) dans ladite paroi de manchon de brûleur (13) ;
**caractérisé en ce que** ledit ensemble Venturi (14') comprend une buse distincte (15) et un diffuseur distinct (16), et la buse (15) est prévue dans la chambre de combustion (11 ; 25, 25', 27, 34) et éjecte l'air comprimé (19a) par le biais dudit orifice d'aspiration (17) dans ledit diffuseur (16), qui est prévu à l'extérieur de ladite paroi de manchon de brûleur (13).

2. Turbine à gaz (22, 30, 31, 32) destinée à exécuter le procédé selon la revendication 1, ladite turbine à gaz (22, 30, 31, 32) comprenant au moins une chambre de combustion (25, 25', 27, 34) destinée à générer un gaz chaud en brûlant un mélange air/carburant et une section de turbine suivante (28, 28'), ladite chambre de combustion (25, 25', 27, 34) s'ouvrant avec une section de transition (35) dans la section de turbine suivante (28, 28'), moyennant quoi ladite au moins une chambre de combustion (25, 25', 27, 34) est entourée par un canal d'air de refroidissement (12), par lequel l'air de refroidissement comprimé (19) s'écoule de manière opposée audit gaz chaud dans ladite chambre de combustion (25, 25', 27, 34), dans laquelle :
ladite chambre de combustion (25, 25', 27, 34) et ledit canal d'air de refroidissement adjacent (12) sont séparés par une paroi de manchon de brûleur (13), et des orifices d'aspiration (17) sont prévus dans ladite paroi de manchon de brûleur (13) à des endroits auxquels la pression statique est suffisamment faible pour que les gaz d'échappement (18a) soient aspirés par lesdits orifices d'aspiration (17) dans ledit canal d'air de refroidissement (12) ; dans laquelle les ensembles Venturi (14, 14') sont prévus au niveau desdits orifices d'aspiration (17) afin de générer la pression statique faible nécessaire ;
lesdits ensembles Venturi (14') sont intégrés à ladite paroi de manchon de brûleur (13) ;
**caractérisée en ce que** lesdits ensembles Venturi (14') comprennent chacun une buse distincte (15) et un diffuseur distinct (16), et **en ce que** la buse (15) est prévue dans la chambre de combustion (11 ; 25, 25', 27, 34) et éjecte l'air comprimé (19a) par le biais d'un orifice d'aspiration respectif (17) dans ledit diffuseur (16), qui est prévu à l'extérieur de ladite paroi de manchon de brûleur (13).

3. Turbine à gaz selon la revendication 2, **caractérisée en ce que** ladite turbine à gaz (22, 30) possède une chambre de combustion annulaire (25, 27) par rapport à un axe de machine de ladite turbine à gaz (22, 30).
